# EUROPEAN PATENT APPLICATION

(11) **EP 4 534 413 A1**
(43) Date of publication of application: **09.04.2025**
(21) Application number: 23201371.4
(22) Date of filing: 03.10.2023
(51) Int. Cl.: B64C 25/14, B64C 25/12

(54) **RETRACTABLE AIRCRAFT LANDING GEAR**

(71) Applicant: Safran Landing Systems UK Ltd, Gloucester, Gloucestershire GL2 9QH (GB)
(72) Inventor: SIMONNEAUX, Yann, Gloucester, GL2 9QH (GB); PADDOCK, Andy, Gloucester, GL2 9QH (GB); BENNETT, Ian Robert, Gloucester, GL2 9QH (GB)
(74) Representative: Wardle, Callum Tarn

(57) **Abstract**

According to a first embodiment of the present invention there is provided a retractable aircraft landing gear for an aircraft, the aircraft having a longitudinal X axis, a lateral Y axis, and a vertical Z axis, the landing gear comprising:
a shock strut having a wheel assembly coupled at a first end;
an upper yoke assembly pivotally arranged to be pivotally coupled to the aircraft about a first pivot axis, and coupled to a second end of the shock strut about a second pivot axis; and
a drag stay pivotally coupled at a first end to the shock strut and arranged to be pivotally coupled at a second end to the aircraft,
wherein one or more of the first and second pivot axes are non-orthogonal to the aircraft lateral Y axis.

## Description

### Technical Field

The present description relates to a retractable aircraft landing gear and an aircraft having such a landing gear.

### Background

It is typical for aircraft of all types for the landing gear to be retractable such that when the aircraft is in flight the landing gear is stowed within the structure of the aircraft, thereby reducing drag. Typically, the landing gear is stowed within a portion of the fuselage and/or wing (in the case of main landing gear), and/or dedicated fairing.

A common design of retractable landing gear utilises a 4-bar linkage in which the landing gear swings in a plane that is parallel to the nominal vertical plane of the aircraft. In these designs, the extended wheel position of the landing gear is the same lateral distance from the aircraft's longitudinal axis as the retracted wheel position.

In some designs of aircraft, such as smaller aircraft, it is desirable for the extended wheel position to be a greater lateral distance from the aircraft's longitudinal axis than the retracted wheel position.

### Summary

According to a first embodiment of the present invention there is provided a retractable aircraft landing gear for an aircraft, the aircraft having a longitudinal X axis, a lateral Y axis, and a vertical Z axis, the landing gear comprising:
a shock strut having a wheel assembly coupled at a first end;
an upper yoke assembly pivotally arranged to be pivotally coupled to the aircraft about a first pivot axis, and coupled to a second end of the shock strut about a second pivot axis; and
a drag stay pivotally coupled at a first end to the shock strut and arranged to be pivotally coupled at a second end to the aircraft,
wherein one or more of the first and second pivot axes are at a skew angle to any one of the aircraft axes.

One or more of the first and second pivot axes may also be at a skew angle to each other.

Additionally or alternatively, the angle between the first and/or second pivot axis and the lateral Y axis is such that the wheel assembly is further outboard or further inboard when the landing gear is extended than when it is retracted.

The angle between first and/or second pivot axis and the vertical Z axis may cause the wheel assembly to rotate about a longitudinal axis of the shock stut as the landing gear is retracted or extended.

The first and second pivot axes preferably do not intersect, and are preferably spaced apart.

The drag stay may be coupled to the shock strut with one of a spherical joint and a cardan joint.

According to another embodiment of the present invention there is provided an aircraft including a retractable landing gear as described above.

### Brief Description of the Drawings

Examples of retractable aircraft landing gear will now be described as non-limiting examples with reference to the accompanying drawings, in which:
Figure 1 schematically illustrates the conventional axes of an aircraft;
Figure 2 schematically illustrates a conventional 4-bar linkage landing gear geometry;
Figures 3, 4 and 5 schematically illustrate an example of a landing gear according to the present invention.

### Detailed Description

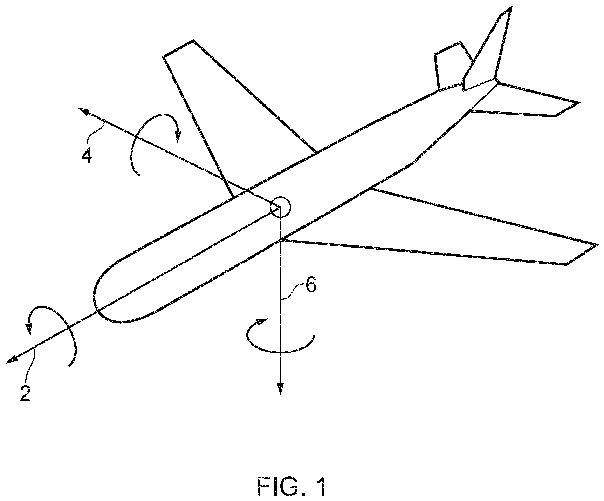

Figure 1 schematically illustrates a typical aircraft and illustrates the conventional three axes of the aircraft - the longitudinal X axis 2 (roll axis), the lateral Y axis 4 (pitch axis), and the vertical Z axis 6 (yaw axis).

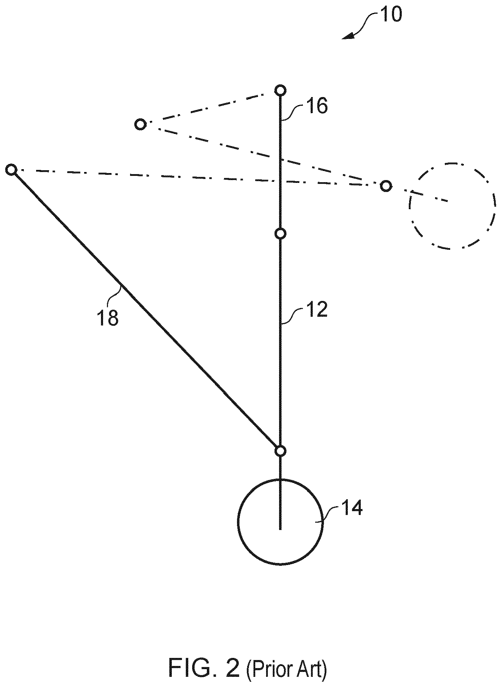

Figure 2 schematically illustrates an aircraft landing gear 10 having a conventional 4-bar linkage geometry. The landing gear is shown in both the extended position (solid lines) and the retracted position (broken lines). The landing gear includes a main fitting 12, which is typically a telescopic shock strut, having a wheel assembly 14 attached at one end. The opposite end of the main fitting 12 is pivotably attached to an upper panel, or upper yoke, 16. The upper panel is in turn pivotably attached to the aircraft structure (not shown). A drag stay 18 is pivotably coupled at one end to the aircraft structure and pivotably coupled at an opposite end to the main fitting 12. In the illustrated example, the pivot axis about which the upper panel 16 is attached to the aircraft structure and the pivot axis about which the upper panel is attached to the main fitting are parallel to the lateral Y axis of the aircraft, such that the landing gear retracts substantially in the fore/aft direction. As a consequence, when the landing gear is retracted the wheel assembly 14 moves along a path that is parallel to the aircraft's longitudinal X axis, such that the lateral distance of the wheel assembly 14 relative to the longitudinal axis remains constant. It will of course be understood that the assembly shown in Figure 2 can be orientated such that the landing gear retracts substantially sideways relative to the longitudinal axis of the aircraft.

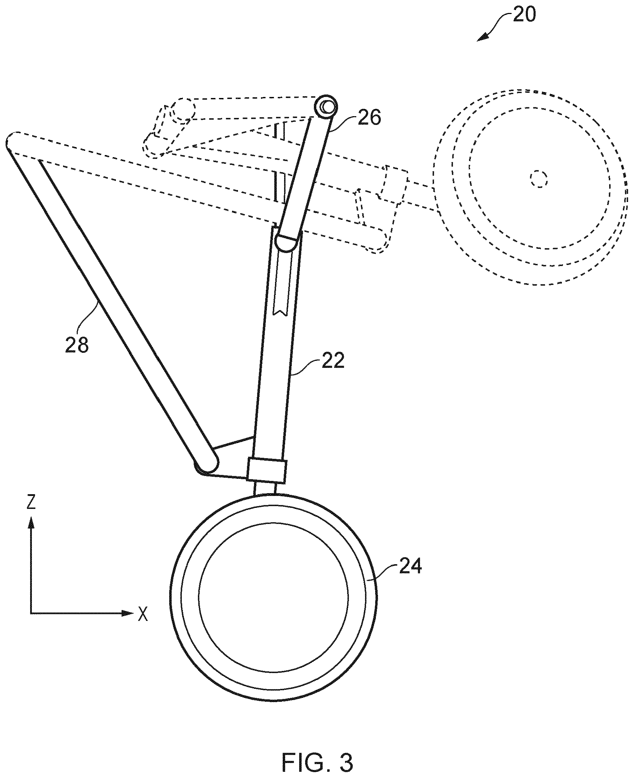

Figures 3, 4, and 5 illustrate an example of a retractable landing gear in accordance with the present invention. In each if Figures 3, 4, and 5 the landing gear is shown in both the extended position and the retracted position (shaded/outline view). In the particular example illustrated, it is assumed that the landing gear retracts substantially in a fore/aft direction. However, it will again be understood that the landing gear be orientated such that the landing gear retracts substantially in a sideways direction.

Figure 3 illustrates a side view of the landing gear, i.e. when viewed in a direction parallel to the lateral Y axis. The landing gear 20 includes a telescopic shock strut 22 having a wheel assembly 24 attached at one end. The opposite end of the shock strut 22 is pivotably attached to an upper panel, or upper yoke, 26. The upper panel is in turn pivotably attached to the aircraft structure (not shown). The upper panel 26 is designed to react loads applied to the landing gear. A drag stay 28 is pivotably coupled at one end to the aircraft structure and pivotably coupled at an opposite end to the shock strut 22.

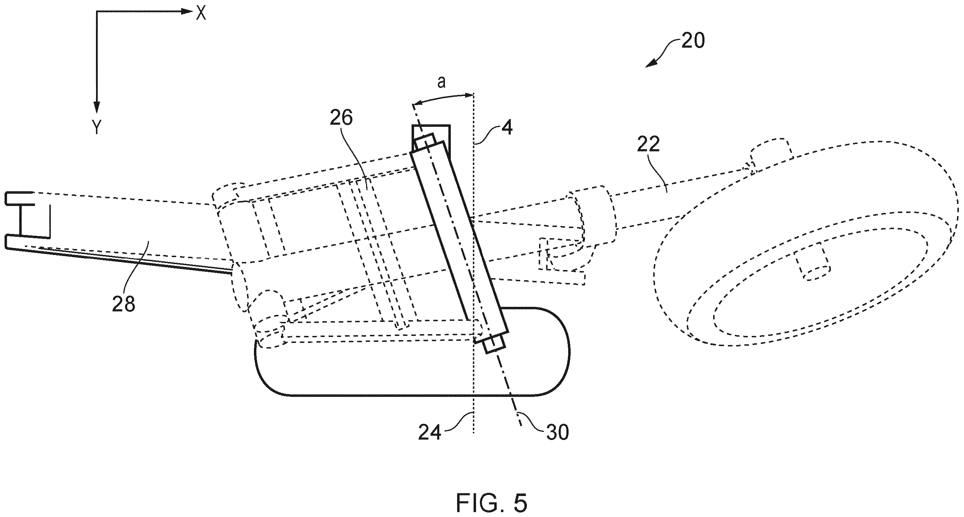

As best seen in Figure 5, which illustrates a plan view of the landing gear, i.e. when viewed in a direction parallel to the vertical Z axis, the first pivot axis 30 of the upper yoke 26 with the aircraft structure is at a skew angle to, i.e. not parallel with, the aircraft's lateral axis 4. In other words, the first pivot axis 30 subtends a yaw angle (is non-orthogonal) with respect to the lateral Y axis of the aircraft. (In the case of the landing gear retracting substantially sideways, the first pivot axis will be skewed to longitudinal X axis). The skew angle subtended between the first pivot axis and the lateral Y axis, denoted angle a in Figure 5, causes the wheel assembly to be at a different distance (either further outboard or further inboard) to the central longitudinal axis X of aircraft when the landing gear is retracted than when it is extended, as is illustrated in Figure 5. The magnitude of this angle dictates the difference in lateral spacing of the wheel assembly from the central longitudinal axis between the retracted and extended positions.

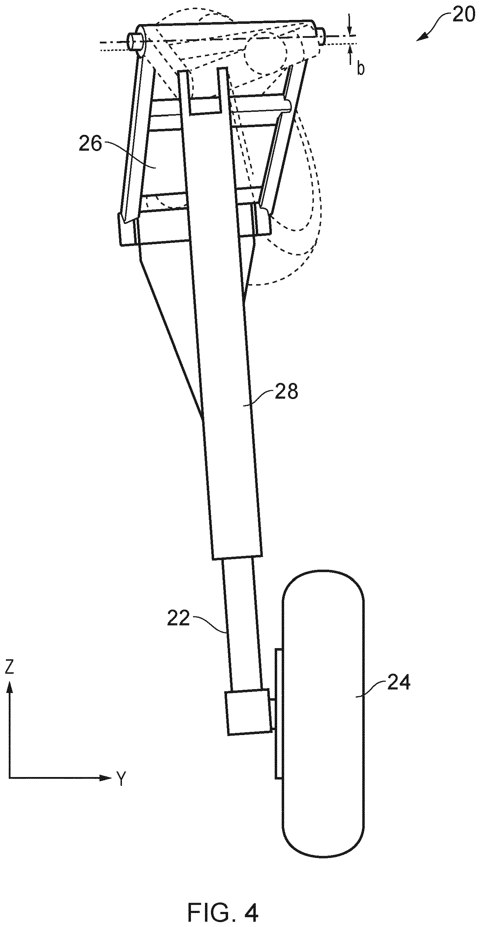

In some examples in accordance with the present invention, the first pivot axis 30 may be orthogonal to the vertical Z axis of the aircraft, i.e. parallel to the X-Y plane. However, in the particular example illustrated in Figures 3-5 the first pivot axis 30 subtends a roll angle b with the lateral Y axis, i.e. is skewed (not orthogonal) to the vertical Z axis. This is illustrated in Figure 4. This angle of the first pivot axis 30 causes the wheel assembly 24 to effectively rotate with respect to a longitudinal axis of the shock strut 22 during retraction and extension (NB the shock strut and wheel assembly do not rotate relative to each other. The rotation is relative to the shock strut axis, with the shock strut and wheel assembly moving as a whole). This can be seen in Figures 4 and 5. The magnitude of this angle dictates the degree of effective rotation. This may be advantageous in reducing the space envelope of the landing gear when retracted.

In other possible examples, the second pivot axis of the upper yoke 26 with the shock strut 22 may be skewed with respect to one or both of the lateral and vertical aircraft axis. This may be either instead of skewing the first pivot axis or may be in combination with a skewed first pivot axis.

In the illustrated example, the first and second pivot axis are not parallel to each other and therefore do not intersect, and are spaced apart.

Due to the angles subtended by either the first and/or second pivot axes, the drag stay is preferably pivotably attached to the airframe using either a spherical or cardan joint.

## Claims

1. A retractable aircraft landing gear for an aircraft, the aircraft having a longitudinal X axis, a lateral Y axis, and a vertical Z axis, the landing gear comprising:
a shock strut having a wheel assembly coupled at a first end;
an upper yoke assembly pivotally arranged to be pivotally coupled to the aircraft about a first pivot axis, and coupled to a second end of the shock strut about a second pivot axis; and
a drag stay pivotally coupled at a first end to the shock strut and arranged to be pivotally coupled at a second end to the aircraft,
wherein one or both of the first and second pivot axes are at a skew angle to any one of the aircraft axes.

2. A retractable aircraft landing gear according to claim 1, wherein the first and second pivot axes are at a skew angle to each other.

3. A retractable aircraft landing gear according to claim 1 or 2, wherein the angle between the first and/or second pivot axis and the lateral Y axis is such that the wheel assembly is further outboard or further inboard when the landing gear is extended than when it is retracted.

4. A retractable aircraft landing gear according to any preceding claim, wherein the angle between first and/or second pivot axis and the vertical Z axis causes the shock strut and wheel assembly to rotate about a longitudinal axis of the shock strut as the landing gear is retracted or extended.

5. A retractable aircraft landing gear according to any preceding claim, wherein the first and second pivot axes do not intersect.

6. A retractable aircraft landing gear according to any preceding claim, wherein the first and second pivot axes are spaced apart.

7. A retractable aircraft landing gear according to any preceding claim, wherein the drag stay is coupled to the shock strut with one of a spherical joint and a cardan joint.

8. An aircraft including a retractable landing gear according to any preceding claim.
